# FASCICULE DE BREVET EUROPEEN

(11) **EP 2 760 708 B1**
(45) Date de publication et mention de la délivrance du brevet: **01.03.2017**
(21) Numéro de dépôt: 12769060.0
(22) Date de dépôt: 20.09.2012
(51) Int. Cl.: B60R 25/10, G10K 9/22

(54) **SIRENE COMPORTANT UN SYSTEME DE CONNEXION AMELIORE**
HUPE MIT EINEM VERBESSERTEN ANSCHLUSSYSTEM
HORN COMPRSING AN IMPROVED CONNECTION SYSTEM

(30) Priorité: 28.09.2011 FR 1158709
(43) Date de publication de la demande: 06.08.2014
(73) Titulaire: Delphi Technologies, Inc., Troy, MI 48007 (US)
(72) Inventeur: NATCHOO, Philippe, F-77680 Roissy-en-Brie (FR); TYTGAT, Sébastien, F-91210 Draveil (FR); PETITGAS, Jérome, F-77230 Moussy-le-Neuf (FR)
(74) Mandataire: Delphi France SAS
(86) Numéro de dépôt international: PCT/EP2012/068547
(87) Numéro de publication internationale: WO 2013/045343

(56) Documents cités:
- EP-A1- 1 502 830
- WO-A1-2005/069678
- WO-A2-2010/035123
- US-A- 4 178 578

## Description

### DOMAINE TECHNIQUE

La présente invention concerne une sirène destinée à équiper un véhicule automobile.

### ARRIERE-PLAN TECHNOLOGIQUE DE L'INVENTION

La présente invention concerne plus particulièrement une sirène destinée à équiper un véhicule automobile et prévue pour émettre un son puissant lorsque ledit véhicule est l'objet d'une effraction.

Ce type de sirène est bien connu, par exemple du document EP1502830 qui décrit une sirène comportant un boîtier qui est délimité par une paroi axiale, par une paroi de fond, et par un couvercle fermant une ouverture opposée à la paroi de fond, et qui contient une carte électronique, une batterie d'alimentation, un ensemble de production de son, et des moyens de raccordement électrique entre les différents composants de la sirène. La sirène est équipée d'un connecteur électrique qui est agencé dans la paroi de fond du boîtier, qui s'étend globalement suivant une direction axiale, et qui est raccordé électriquement à la carte électronique. Le connecteur électrique est prévu pour permettre la connexion électrique de la sirène à un circuit de commande externe prévu pour déclencher la sirène en cas d'effraction.

Généralement, la carte électronique est agencée parallèlement à la paroi de fond du boîtier, au-dessus de la batterie d'alimentation qui est montée contre la paroi de fond. L'ensemble de production de son est montée au-dessus de la carte électronique et il est raccordé à la carte par des câbles. Un exemple d'une sirène selon le préambule est divulgué dans EP 1 502 830 A1.

L'assemblage d'un tel type de sirène s'avère relativement complexe puisqu'il nécessite un grand nombre d'étapes différentes qui peuvent être difficile à automatiser et nécessitent l'intervention manuelle d'un opérateur. De plus, l'étanchéité de l'assemblage peut être difficile à assurer ce qui peut provoquer des dysfonctionnements en cas de pénétration d'un liquide, en particulier au niveau de la batterie d'alimentation.

### RESUME DE L'INVENTION

La présente invention vise à résoudre notamment les problèmes mentionnés précédemment en proposant une solution simple et économique.

Dans ce but, l'invention propose une sirène destinée à équiper un véhicule automobile, comportant un boîtier principal qui est délimité par une paroi de fond et par un couvercle fermant une ouverture opposée à la paroi de fond, et qui contient au moins une carte électronique et une batterie d'alimentation prévus pour être raccordés à un ensemble de production de son et à un connecteur électrique externe, caractérisée en ce que la carte électronique s'étend globalement dans un plan orthogonal à la paroi de fond et en ce que l'ensemble de production de son est agencé contre la paroi de fond du boîtier principal, du côté opposé à la carte électronique.

Selon d'autres caractéristiques avantageuses :
- une première série de languettes conductrices est agencée dans la paroi de fond du boîtier principal de manière à raccorder électriquement le connecteur électrique à la carte électronique ;
- le connecteur électrique s'étend sensiblement orthogonalement à la paroi de fond du boîtier principal, du côté opposé à la carte électronique, et la première série de languettes conductrices traverse la paroi de fond et se prolonge à l'intérieur du connecteur électrique en formant des broches de connexion pour un raccordement externe ;
- une seconde série de languettes conductrices est agencée sur la paroi de fond du boîtier principal de manière à raccorder électriquement la batterie d'alimentation à la carte électronique ;
- une troisième série de languettes conductrices est agencée dans la paroi de fond du boîtier principal de manière à raccorder électriquement l'ensemble de production de son à la carte électronique à travers la paroi de fond ;
- la carte électronique comporte des pistes de contact électrique qui sont agencées le long d'un bord de la carte électronique dit bord de connexion, du côté de la paroi de fond du boîtier principal, et qui sont prévues pour recevoir les languettes conductrices en vue de réaliser le raccordement électrique avec la carte électronique ;
- chaque languette conductrice comporte une portion en forme de fourche prévue pour recevoir le bord de connexion et glisser sur les pistes de contact électrique ;
- l'ensemble de production de son est agencé dans un boîtier secondaire globalement cylindrique d'axe principal sensiblement orthogonal à la paroi de fond, l'ouverture du boîtier secondaire étant orientée du côté opposé à l'ouverture du boîtier principal et étant fermée par un capot formant résonateur sonore pour les moyens de production de son ;
- la paroi de fond du boîtier secondaire comporte deux plots de connexion qui sont raccordés électriquement à la carte électronique et les moyens de production de son comportent deux bornes de connexion qui sont prévues pour venir en appui axial contre les plots de connexion de manière à réaliser le raccordement électrique des moyens de production de son à la carte électronique ;
- la paroi axiale externe du boîtier secondaire comporte des organes de montage à baïonnette prévus pour coopérer avec des organes de fixation complémentaires agencés sur une platine de support de manière à permettre la fixation de la sirène sur la platine de support par insertion axiale et pivotement autour de l'axe du boîtier secondaire cylindrique entre une position angulaire neutre et une position angulaire verrouillée.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est une vue en perspective éclatée qui représente la sirène selon l'invention munie d'un boîtier principal contenant une carte électronique et une batterie d'alimentation et munie d'un boîtier secondaire contenant des moyens de production de son ;
- la figure 2 est une vue en perspective qui représente la sirène de la figure 1 montée et qui montre le capot du boîtier secondaire ainsi qu'un connecteur électrique externe ;
- la figure 3 est une vue en perspective qui représente la sirène de la figure 1 lorsque le couvercle du boîtier principal est retiré et qui montre la carte électronique et des batteries d'alimentation en positions connectées ;
- la figure 4 est une vue en perspective similaire à celle de la figure 3 qui montre l'intérieur du boîtier principal avant l'insertion de la carte électronique ;
- la figure 5 est une vue en perspective de côté qui représente la sirène de la figure 1 sans le couvercle du boîtier principal et sans le capot du boîtier secondaire, avant le montage des éléments de production de son ;
- la figure 6 est une vue en perspective qui représente la sirène de la figure 1 en position verrouillée dans le réceptacle d'une platine de support complémentaire ;
- la figure 7 est une vue de dessus qui représente la sirène de la figure 1 en position neutre dans le réceptacle de la platine de support de la figure 6 ;
- la figure 8 est une similaire à celle de la figure 7 qui représente la sirène de la figure 1 en position verrouillée dans le réceptacle de la platine de support de la figure 6.

### DESCRIPTION DES MODES DE REALISATION PREFERES

Dans la suite de la description, des éléments identiques ou similaires seront désignés par les mêmes références.

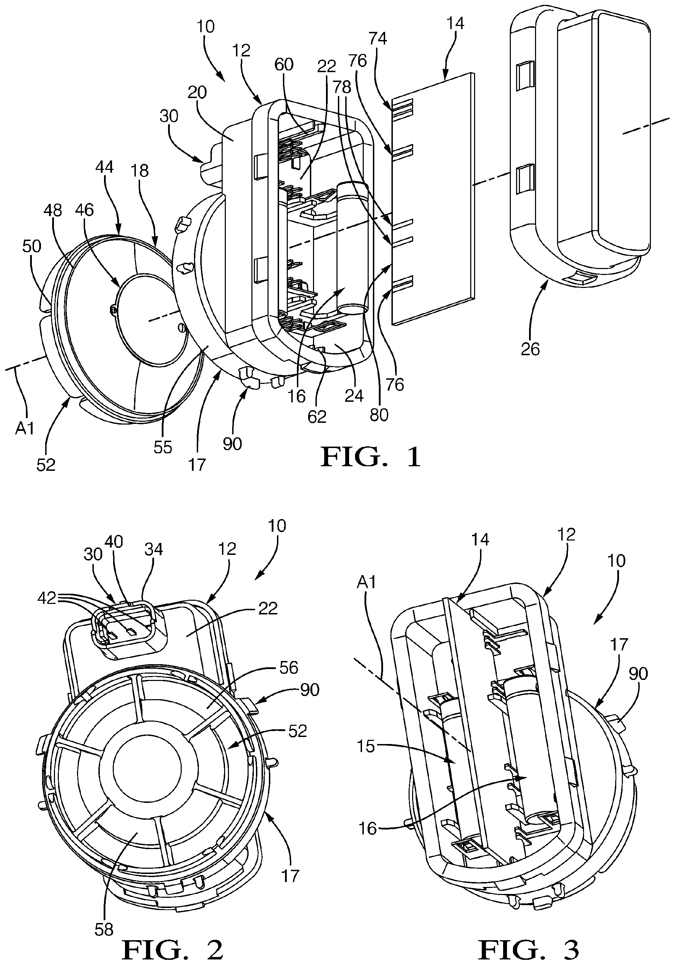

On a représenté sur les figures 1 à 8 une sirène 10 conforme aux enseignements de l'invention. La sirène 10 comporte un boîtier principal 12 de forme globalement parallélépipédique qui est destiné à recevoir une carte électronique 14 et deux batteries d'alimentation 15, 16 et un boîtier secondaire 17 de forme globalement cylindrique qui contient un ensemble de production de son 18 et qui est agencé au dos du boîtier principal 12. Le boîtier principal 12 et le boîtier secondaire 17 sont de préférence réalisés par moulage en matière plastique d'une seule pièce.

La carte électronique 14 est par exemple une plaque à circuits imprimés de forme globalement rectangulaire, qui est munie sur au moins une face de composants électroniques (non représentés), notamment une unité électronique de contrôle.

Les deux batteries 15, 16 sont ici des piles cylindriques mais elles pourraient prendre des formes différentes ou elles pourraient être remplacées par une seule batterie.

Conformément au mode de réalisation préféré de l'invention, le boîtier principal 12 est formé d'une paroi axiale 20 qui s'étend ici suivant un axe principal A1, depuis une paroi de fond 22 transversale, vers une ouverture supérieure 24 qui est fermée par un couvercle 26.

Des moyens de raccordement électrique 28 sont agencés dans la paroi de fond 22 du boîtier principal 12 en vue de raccorder électriquement les différents composants de la sirène 10 et en vue de raccorder la carte électronique 14 à un connecteur électrique 30.

Selon le mode de réalisation représenté, le connecteur électrique 30 est agencé au dos de la paroi de fond 22 du boîtier principal, selon une direction axiale parallèle à l'axe principal A1. On note que la direction générale du connecteur 30 correspond globalement à la direction de connexion, c'est-à-dire à la direction d'insertion du connecteur complémentaire.

Comme représenté notamment sur la figure 2, le connecteur 30 est ici du type femelle. Il comporte une jupe axiale 34 de section oblongue sensiblement orthogonale à la paroi de fond 22 du boîtier principal 12. L'ouverture 40 du connecteur 30 permet l'insertion d'un connecteur mâle (non représenté) appartenant au circuit électronique du véhicule sur lequel la sirène 10 est montée. Des fiches axiales externes de connexion électrique 42 sont agencées à l'intérieur de la jupe axiale 34 pour permettre le raccordement électrique à la carte électronique 14.

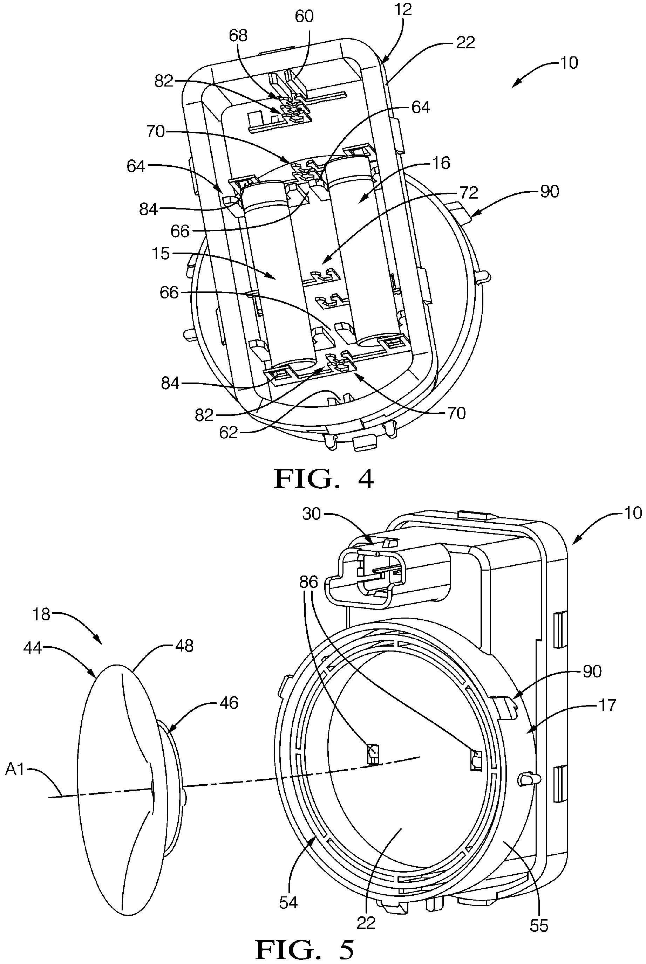

En considérant plus particulièrement les figures 1 et 5, l'ensemble de production du son 18 comporte ici une membrane 44, ou diaphragme, associée à un dispositif électrique d'excitation 46, tel qu'un élément piézoélectrique, électromagnétique ou analogue, qui est commandé par la carte électronique 14. La membrane 44 a globalement la forme d'un disque souple incurvé vers son centre. Le bord périphérique externe 48 de la membrane 44 est monté pincé axialement entre le bord périphérique externe 50 d'un capot 52 formant résonateur sonore et un rebord périphérique interne 54 de la paroi axiale 55 du boîtier secondaire 17.

Selon une variante de réalisation (non représentée), la membrane 44 peut être assemblée préalablement sur le capot 52 au moyen d'une bague de fixation qui vient pincer la membrane 44 contre le bord périphérique externe 50.

Selon un mode de réalisation avantageux, le dispositif électrique d'excitation 46 est agencé entre la membrane 44 et la paroi de fond 22 de manière qu'il puisse être connecté à la carte électronique 14 à travers la paroi de fond 22.

Le capot 52 est de préférence pourvu d'ouvertures 56 permettant la diffusion du son émis par les moyens de production de son 18. Le capot 52 a ici une portion centrale 58 de forme bombée vers l'extérieur et prévue pour former avec la membrane 44 et le boîtier secondaire 17 une chambre de résonance sonore adaptée à la fonction sirène. Les ouvertures 56 et la forme de la portion centrale 58 visent à permettre une propagation adéquate du son produit par la membrane 44 lorsqu'elle est excitée et à optimiser l'intensité sonore.

Conformément aux enseignements de l'invention, en considérant plus particulièrement les figures 1 à 5, la carte électronique 14 est prévue pour être montée dans le boîtier principal 12 selon une orientation perpendiculaire à la paroi de fond 12. A cet effet, le boîtier principal 12 comporte des éléments de maintien 60, 62 qui retiennent la carte électronique 14 dans cette position. Les éléments de maintien comportent ici deux rainures axiales 60, 62 agencées face à face sur la face interne de la paroi axiale 20 et formant glissières.

Selon le mode de réalisation représenté, la carte électronique 14 s'étend globalement dans un plan médian du boîtier principal 12 de manière à le diviser en deux chambres sensiblement identiques. Avantageusement, les deux batteries d'alimentation 15, 16 sont agencées de part et d'autre de la carte électronique 14, chacune dans une chambre, chaque batterie d'alimentation 15, 16 étant reçue dans des berceaux 64 réalisés par moulage avec la paroi de fond 22. Les berceaux 64 délimitent également des fentes 66 permettant l'insertion de la carte électronique 14.

Conformément aux enseignements de l'invention, la paroi de fond 22 est munie de plusieurs séries de languettes conductrices 68, 70, 72 qui sont prévues pour venir en appui contre des séries de pistes de contact 74, 76, 78, ou plages de contact, agencées sur la carte électronique 14 en vue de permettre le raccordement électrique des composants de la sirène 10. Les pistes de contact 74, 76, 78 sont agencées le long du bord longitudinal 80 de la carte électronique 14 situé du côté de la paroi de fond 22. Ce bord 80 sera appelé bord de connexion.

Une première série 68 de languettes conductrices est associée à une première série 74 de pistes de contact agencées au voisinage d'une première extrémité longitudinale du bord de connexion 80. Ces languettes conductrices 68 traversent la paroi de fond 22 et se prolongent à l'intérieur du connecteur 30 opposé pour former les fiches axiales 42. Du côté de la carte électronique 14, ces languettes conductrices 68 forment des fourches 82. Chaque fourche 82 est agencée sur la paroi de fond 22 de manière à enserrer le bord de connexion 80 et assurer un contact électrique approprié avec une piste de contact 74 associée.

Une seconde série 70 de languettes conductrices est associée à une seconde série 76 de pistes de contact prévues pour le raccordement électrique aux deux batteries d'alimentation 15, 16. Ces languettes conductrices 70 comportent chacune une fourche 82 et une lame élastique 84 prévue pour venir en appui contre une borne de la batterie d'alimentation 15, 16 associée.

Une troisième série 72 de languettes conductrices est associée à une troisième série 78 de pistes de contact prévues pour le raccordement électrique à l'ensemble de production de son 18. Ces languettes conductrices 72 traversent la paroi de fond 22 et forment dans le fond du boîtier secondaire 17 deux plots de connexion 86 prévus pour recevoir en appui axial les bornes de connexion du dispositif électrique d'excitation 46.

Selon une variante de réalisation, en remplacement des fourches 82, les languettes conductrices 68, 70, 72 peuvent être pourvues d'une portion élastique flexible prévue pour venir en contact avec les pistes de contact 74, 76, 78 associées.

Avantageusement, les languettes conductrices 68, 70, 72 sont surmoulées dans la paroi de fond 22. Elles sont réalisées de préférence en métal par découpage et pliage. Les languettes conductrices 68, 70, 72 peuvent être liées entre elles par des ponts de matière avant leur positionnement dans le moule de fabrication du boîtier principal 12. Elles forment alors une grille de connexion (« leadframe »). Cette grille de connexion, formée par découpage et pliage à partir d'une feuille de métal conducteur électrique, facilite l'assemblage des languettes conductrices 68, 70, 72 puisqu'elles forment une seule pièce. Lors du surmoulage, ou après le surmoulage, du boîtier 12, les ponts de matière superflus sont sectionnés de manière à rendre les languettes conductrices 68, 70, 72 opérationnelles.

La carte électronique 14 est reliée au connecteur 30 de manière à échanger des signaux électriques avec un système électronique (non représenté) de contrôle de l'état du véhicule. Plus particulièrement, la carte électronique 14 reçoit des signaux de commande de déclenchement de la sirène 10. En réponse, la carte électronique 14 génère un signal électrique en direction du dispositif électrique d'excitation 46.

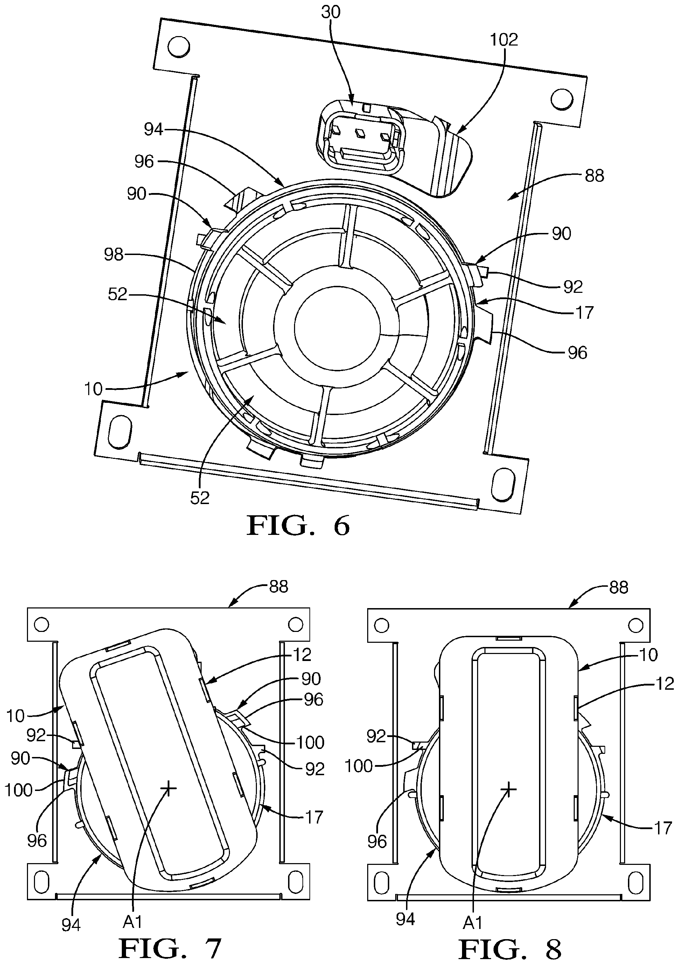

Conformément à un mode de réalisation avantageux illustré notamment par les figures 6 à 8, la sirène 10 est prévue pour être fixée sur une platine de support 88 du véhicule par emboîtement élastique, de préférence par un montage à baïonnette. A cet effet, la paroi axiale externe 55 du boîtier secondaire 17 comporte des organes de montage 90 à baïonnette qui sont prévus pour coopérer avec des éléments de verrouillage 92 complémentaires agencés sur la platine de support 88. La platine de support 88 comporte un réceptacle 94 prévu pour recevoir le boîtier secondaire 17.

Le montage à baïonnette est réalisé ici par insertion axiale du boîtier secondaire 17 dans le réceptacle 94 et par pivotement de la sirène autour de l'axe A1 du boîtier secondaire 17 cylindrique, entre une position angulaire neutre, illustrée par la figure 7, et une position angulaire verrouillée, illustrée par les figures 6 et 8.

Les organes de montage à baïonnette 90 sont ici réalisés sous la forme d'ergots radiaux. Ils sont prévus pour être reçus par insertion axiale dans une première série d'encoches axiales 96 agencées dans le bord périphérique 98 du réceptacle 94. Les éléments de verrouillage 92 sont ici réalisés sous la forme d'une seconde série d'encoches axiales qui sont agencées dans le bord périphérique 98 du réceptacle 94 et qui sont prévues pour recevoir chacune un bossage 100 complémentaire de l'ergot 90 associé lorsque la sirène 10 occupe sa position angulaire verrouillée. Le bossage 100 a ici la forme d'une nervure. Les encoches 92 de la seconde série sont décalées angulairement par rapport aux encoches axiales 96 de la première série, globalement d'un angle égal à l'angle de pivotement de la sirène 10 entre la position angulaire neutre et la position angulaire verrouillée.

Avantageusement, la platine de support 88 comporte une ouverture 102 qui est prévue pour recevoir axialement le connecteur 30 dans la position neutre de la sirène 10 et pour permettre le mouvement angulaire du connecteur 30 lors du pivotement de la sirène 10 depuis sa position neutre jusqu'à sa position verrouillée.

Selon des variantes de réalisation non représentées, d'autres moyens d'emboîtement pourraient être prévus sur le boîtier secondaire 17 en vue de permettre la fixation de la sirène 10 sur la platine de support 88. On pourrait par exemple utiliser des languettes élastiques de fixation ou clips de fixation.

On décrit maintenant un procédé de fabrication de la sirène 10 selon l'invention.

La grille de connexion formant les languettes conductrices 68, 70, 72 est réalisée au préalable comme mentionné ci-dessus. Elle est ensuite disposée dans le moule de fabrication du boîtier principal 12. La matière plastique formant le boîtier 12 est ensuite injectée dans le moule de manière à surmouler les languettes conductrices 68, 70, 72 dans la paroi de fond 22 du boîtier 12, puis les ponts de matière superflus sont découpés et supprimés.

L'ensemble de production de son 18 est monté dans le boîtier secondaire 17 par insertion axiale du dispositif électrique d'excitation 46 et de la membrane 44. On note que le raccordement électrique du dispositif électrique d'excitation 46 est réalisé par simple translation axiale sans qu'il soit nécessaire d'ajouter une opération supplémentaire de connexion.

Le boîtier secondaire 17 est fermé par le capot 52 qui peut être soudé ou collé contre le rebord interne 54 de la paroi axiale 55.

Les batteries d'alimentation 15, 16 sont montées dans le boîtier 12 principal 12 en étant reçu dans les berceaux 64 et retenues en position par les lames élastiques 84.

La carte électronique 14 est insérée axialement A1 dans le boîtier principal 12 de manière que son bord de connexion 80 pénètre en premier par l'ouverture 24 et que les bords axiaux opposés de la carte électronique 14 soient reçus dans les rainures 60, 62. La carte électronique 14 est insérée jusqu'à ce qu'elle vienne en butée axiale de sorte que toutes les languettes conductrices 68, 70, 72 glissent contre les pistes de contact 74, 76, 78 associées et réalisent la connexion électrique au cours de cette insertion.

Le boîtier principal 12 peut ensuite être fermé de manière étanche par emboîtement du couvercle 26. L'étanchéité peut être réalisée par un joint élastomère (non représenté) comprimé entre la paroi axiale 20 du boîtier principal 12 et le couvercle 26.

La sirène selon l'invention permet de faciliter le raccordement électrique de la carte électronique avec les autres composants. Elle permet aussi de faciliter l'isolation de la carte électronique par rapport à la batterie d'alimentation. Le positionnement de la carte électronique dans le boîtier principal est plus simple et plus fiable.

L'agencement selon l'invention permet aussi de séparer la fonction de production de son et la fonction de contrôle de la sirène ce qui facilite les opérations d'assemblage et les opérations de maintenance, tout en offrant une plus grande flexibilité dans le choix des composants et dans les modes d'assemblage.

La structure de la sirène selon l'invention est plus facile à isoler vis-à-vis des liquides et/ou de la poussière.

On note que la sirène 10 selon l'invention permet de réaliser tous les raccordements électriques avec la carte électronique 14 en une seule étape consistant en l'insertion axiale de la carte électronique 14 dans le boîtier principal 12. Grâce à l'agencement selon l'invention, ces raccordements électriques sont plus fiables et de meilleure qualité.

On note que la fixation de la sirène 10 selon l'invention, en utilisant le corps du boîtier secondaire 17 pour la fixation à baïonnette, permet de minimiser les contraintes appliquées sur la sirène 10 lors des opérations de fixation ce qui évite des déformations qui pourraient détériorer les qualités acoustiques de la sirène 10. Cette fixation permet aussi de minimiser l'encombrement axial général de la sirène avec sa platine de support et ses moyens de fixation.

L'agencement selon l'invention permet d'obtenir une sirène particulièrement compacte ce qui facilite son agencement dans le véhicule, en particulier dans le compartiment moteur du véhicule où l'espace disponible est très limité. De plus, l'étanchéité aux liquides est renforcée.

## Revendications

1. Sirène (10) destinée à équiper un véhicule automobile, comportant un boîtier principal (12) qui est délimité par une paroi de fond (22) et par un couvercle (26) fermant une ouverture (24) opposée à la paroi de fond (22), et qui contient au moins une carte électronique (14) et une batterie d'alimentation (16) prévus pour être raccordés à un ensemble de production de son (18) et à un connecteur électrique externe (30),
**caractérisée en ce que** la carte électronique (14) s'étend globalement dans un plan orthogonal à la paroi de fond (22) et **en ce que** l'ensemble de production de son (18) est agencé contre la paroi de fond (22) du boîtier principal (12), du côté opposé à la carte électronique (14).

2. Sirène (10) selon la revendication précédente, **caractérisée en ce qu'**une première série de languettes conductrices (68) est agencée dans la paroi de fond (22) du boîtier principal (12) de manière à raccorder électriquement le connecteur électrique (30) à la carte électronique (14).

3. Sirène (10) selon la revendication précédente, **caractérisée en ce que** le connecteur électrique (30) s'étend sensiblement orthogonalement à la paroi de fond (22) du boîtier principal (12), du côté opposé à la carte électronique (14), et **en ce que** la première série de languettes conductrices (68) traverse la paroi de fond (22) et se prolonge à l'intérieur du connecteur électrique (30) en formant des broches de connexion (42) pour un raccordement externe.

4. Sirène (10) selon l'une quelconque des revendications précédentes, **caractérisée en ce qu'**une seconde série de languettes conductrices (70) est agencée sur la paroi de fond (22) du boîtier principal (12) de manière à raccorder électriquement la batterie d'alimentation (15, 16) à la carte électronique (14).

5. Sirène (10) selon l'une quelconque des revendications précédentes, **caractérisée en ce qu'**une troisième série de languettes conductrices (72) est agencée dans la paroi de fond (22) du boîtier principal (12) de manière à raccorder électriquement l'ensemble de production de son (18) à la carte électronique (14) à travers la paroi de fond (22).

6. Sirène (10) selon l'une quelconque des revendications 2 à 5, **caractérisée en ce que** la carte électronique (14) comporte des pistes de contact électrique (74, 76, 78) qui sont agencées le long d'un bord (80) de la carte électronique (14) dit bord de connexion, du côté de la paroi de fond (22) du boîtier principal (12), et qui sont prévues pour recevoir les languettes conductrices (68, 70, 72) en vue de réaliser le raccordement électrique avec la carte électronique (14).

7. Sirène (10) selon la revendication précédente, **caractérisée en ce que** chaque languette conductrice (68, 70, 72) comporte une portion en forme de fourche (82) prévue pour recevoir le bord de connexion (80) et glisser sur les pistes de contact électrique (74, 76, 78).

8. Sirène (10) selon l'une quelconque des revendications précédentes, **caractérisée en ce que** l'ensemble de production de son (18) est agencé dans un boîtier secondaire (17) globalement cylindrique d'axe principal (A1) sensiblement orthogonal à la paroi de fond (22), l'ouverture du boîtier secondaire (17) étant orientée du côté opposé à l'ouverture (24) du boîtier principal (12) et étant fermée par un capot (52) formant résonateur sonore pour les moyens de production de son (18).

9. Sirène (10) selon la revendication précédente, **caractérisée en ce que** la paroi de fond (22) du boîtier secondaire (17) comporte deux plots de connexion (86) qui sont raccordés électriquement à la carte électronique (14) et **en ce que** les moyens de production de son (18) comportent deux bornes de connexion qui sont prévues pour venir en appui axial contre les plots de connexion (86) de manière à réaliser le raccordement électrique des moyens de production de son (18) à la carte électronique (14).

10. Sirène (10) selon l'une quelconque des revendications précédentes, prise en combinaison avec la revendication 8 ou 9, **caractérisée en ce que** la paroi axiale externe (55) du boîtier secondaire (17) comporte des organes de montage à baïonnette (90) prévus pour coopérer avec des éléments de verrouillage (92) complémentaires agencés sur une platine de support (88) de manière à permettre la fixation de la sirène (10) sur la platine de support (88) par insertion axiale et pivotement autour de l'axe (A1) du boîtier secondaire cylindrique (17) entre une position angulaire neutre et une position angulaire verrouillée.

## Patentansprüche

1. Sirene (10) für ein Kraftahrzeug, enthaltend ein Hauptgehäuse (12), das von einer Rückwand (22) und einer Abdeckung (26) eingegrenzt wird, die eine der Rückwand (22) entgegengesetzte Öffnung (24) verschließt, und die zumindest eine elektronische Karte (14) und eine Versorgungsbatterie (16) enthält, die dazu vorgesehen sind, mit einer Tonerzeugungseinheit (18) und einem externen, elektrischen Verbinder (30) verbunden zu werden, **dadurch gekennzeichnet, dass** die elektronische Karte (14) sich insgesamt in einer Ebene orthogonal zur Rückwand (22) erstreckt und dass die Tonerzeugungseinheit (18) an der Rückwand (22) des Hauptgehäuses (12) auf der der elektronischen Karte (14) entgegengesetzten Seite angeordnet ist.

2. Sirene (10) nach dem vorangehenden Anspruch, **dadurch gekennzeichnet, dass** eine erste Reihe von leitfähigen Zungen (68) in der Rückwand (22) des Hauptgehäuses (12) so angeordnet ist, dass sie den elektrischen Verbinder (30) elektrisch mit der elektronischen Karte (14) verbinden.

3. Sirene (10) nach dem vorangehenden Anspruch, **dadurch gekennzeichnet, dass** der elektrische Verbinder (30) sich im Wesentlichen orthogonal zur Rückwand (22) des Hauptgehäuses (12) auf der der elektronischen Karte (14) entgegengesetzten Seite erstreckt und dass die erste Reihe von leitfähigen Zungen (68) die Rückwand (22) durchsetzt und sich im Inneren des elektrischen Verbinders (30) fortsetzt, indem sie Verbindungsstifte (42) für einen externen Anschluss bildet.

4. Sirene (10) nach einem der vorangehenden Ansprüche, **dadurch gekennzeichnet, dass** eine zweite Reihe von leitfähigen Zungen (70) an der Rückwand (22) des Hauptgehäuses (12) so angeordnet ist, dass sie die Versorgungsbatterie (15, 16) elektrisch mit der elektronischen Karte (14) verbindet.

5. Sirene (10) nach einem der vorangehenden Ansprüche, **dadurch gekennzeichnet, dass** eine dritte Reihe von leitfähigen Zungen (72) in der Rückwand (22) des Hauptgehäuses (12) so angeordnet ist, dass sie die Tonerzeugungseinheit (18) elektrisch mit der elektronischen Karte (14) durch die Rückwand (22) hindurch verbindet.

6. Sirene (10) nach einem der Ansprüche 2 bis 5, **dadurch gekennzeichnet, dass** die elektronische Karte (14) elektrische Kontaktbahnen (74, 76, 78) aufweist, die entlang einer Randkante (80) der elektronischen Karte (14), Verbindungskante genannt, auf der Seite der Rückwand (22) des Hauptgehäuses (12) angeordnet sind und die dazu vorgesehen sind, die leitfähigen Zungen (68, 70, 72) aufzunehmen, um den elektrischen Anschluss an die elektronische Karte (14) herzustellen.

7. Sirene (10) nach dem vorangehenden Anspruch, **dadurch gekennzeichnet, dass** jede leitfähige Zunge (68, 70, 72) einen gabelförmigen Abschnitt (82) aufweist, der dazu vorgesehen ist, die Verbindungskante (80) aufzunehmen und auf den elektrischen Kontaktbahnen (75, 76, 78) zu gleiten.

8. Sirene (10) nach einem der vorangehenden Ansprüche, **dadurch gekennzeichnet, dass** die Tonerzeugungseinheit (18) in einem insgesamt zylindrischen Nebengehäuse (17) mit einer im Wesentlichen orthogonal zur Rückwand (22) verlaufenden Hauptachse (A1) angeordnet ist, wobei die Öffnung des Nebengehäuses (17) auf der der Öffnung (24) des Hauptgehäuses (12) entgegengesetzten Seite ausgerichtet und mit einer Kappe (52) verschlossen ist, die einen akustischen Resonator für die Tonerzeugungsmittel (18) bildet.

9. Sirene (10) nach dem vorangehenden Anspruch, **dadurch gekennzeichnet, dass** die Rückwand (22) des Nebengehäuses (17) zwei Anschlussstellen (86) aufweist, die elektrisch mit der elektronischen Karte (14) verbunden sind, und dass die Tonerzeugungsmittel (18) zwei Anschlussklemmen aufweisen, die dazu vorgesehen sind, axial in Anlage an die Anschlussstellen (86) zu gelangen, so dass sie die elektrische Verbindung der Tonerzeugungsmittel (18) mit der elektronischen Karte (14) herstellen.

10. Sirene (10) nach einem der vorangehenden Ansprüche in Kombination mit Anspruch 8 oder 9, **dadurch gekennzeichnet, dass** die axiale Außenwand (55) des Nebengehäuses (17) bajonettartige Montageglieder (90) aufweist, die dazu vorgesehen sind, mit komplementär ausgeführten Verriegelungselementen (92) zusammenzuwirken, die so an einer Tragplatte (88) angeordnet sind, dass sie das Befestigen der Sirene (10) an die Tragplatte (88) durch axiales Einführen und Verschwenken um die Achse (A1) des zylindrischen Nebengehäuses (17) zwischen einer neutralen Winkelstellung und einer verriegelten Winkelstellung gestatten.

## Claims

1. Horn (10) intended for a motor vehicle, comprising a main housing (12) which is delimited by a bottom wall (22) and by a cover (26) closing an opening (24) opposite the bottom wall (22), and which contains at least one electronic board (14) and a power supply battery (16) designed to be connected to a sound production assembly (18) and to an external electrical connector (30),
**characterized in that** the electronic board (14) extends globally in a plane orthogonal to the bottom wall (22) and **in that** the sound production assembly (18) is arranged against the bottom wall (22) of the main housing (12), on the side opposite the electronic board (14).

2. Horn (10) according to the preceding claim, **characterized in that** a first series of conductive tongues (68) is arranged in the bottom wall (22) of the main housing (12) so as to electrically connect the electrical connector (30) to the electronic board (14).

3. Horn (10) according to the preceding claim, **characterized in that** the electrical connector (30) extends substantially orthogonally to the bottom wall (22) of the main housing (12), on the side opposite the electronic board (14), and **in that** the first series of conductive tongues (68) passes through the bottom wall (22) and is extended inside the electrical connector (30) by forming connection pins (42) for an external connection.

4. Horn (10) according to any one of the preceding claims, **characterized in that** a second series of conductive tongues (70) is arranged on the bottom wall (22) of the main housing (12) so as to electrically connect the power supply battery (15, 16) to the electronic board (14).

5. Horn (10) according to any one of the preceding claims, **characterized in that** a third series of connductive tongues (72) is arranged in the bottom wall (22) of the main housing (12) so as to electrically connect the sound production assembly (18) to the electronic board (14) through the bottom wall (22).

6. Horn (10) according to any one of Claims 2 to 5, **characterized in that** the electronic board (14) comprises electrical contact tracks (74, 76, 78) which are arranged along an edge (80) of the electronic board (14) called connection edge, on the side of the bottom wall (22) of the main housing (12), and which are designed to receive the conductive tongues (68, 70, 72) in order to produce the electrical connection with the electronic board (14).

7. Horn (10) according to the preceding claim, **characterized in that** each conductive tongue (68, 70, 72) comprises a portion in the form of a fork (82) designed to receive the connection edge (80) and slide onto the electrical contact tracks (74, 76, 78).

8. Horn (10) according to any one of the preceding claims, **characterized in that** the sound production assembly (18) is arranged in a globally cylindrical secondary housing (17) of main axis (A1) substantially orthogonal to the bottom wall (22), the opening of the secondary housing (17) being oriented on the side opposite the opening (24) of the main housing (12) and being closed by a sound resonator-forming cap (52) for the sound production means (18).

9. Horn (10) according to the preceding claim, **characterized in that** the bottom wall (22) of the secondary housing (17) comprises two connection bump contacts (86) which are electrically connected to the electronic board (14) and **in that** the sound production means (18) comprise two connection terminals which are designed to come to bear axially against the connection bump contacts (86) so as to produce the electrical connection of the sound production means (18) to the electronic board (14).

10. Horn (10) according to any one of the preceding claims, taken in combination with Claim 8 or 9, **characterized in that** the outer axial wall (55) of the secondary housing (17) comprises bayonetted mounting members (90) designed to cooperate with complementary locking elements (92) arranged on a support plate (88) so as to allow the fixing of the horn (10) onto the support plate (88) by axial insertion and pivoting about the axis (A1) of the cylindrical secondary housing (17) between a neutral angular position and a locked angular position.
